# EUROPEAN PATENT APPLICATION

(11) **EP 1 482 445 A2**
(43) Date of publication of application: **01.12.2004**
(21) Application number: 04101746.8
(22) Date of filing: 26.04.2004
(51) Int. Cl.: G06T 3/40

(54) **Image interpolation apparatus and method**

(30) Priority: 24.05.2003 KR 2003033183
(71) Applicant: Samsung Electronics Co., Ltd., Suwon-si, Gyeonggi-Do 442-742 (KR)
(72) Inventor: LEE, Jong-whan, Suji-eup, Yongin-si Gyeonggi-do (KR)
(74) Representative: Read, Matthew Charles

(57) **Abstract**

An image interpolation apparatus and an image interpolation method. The image interpolation apparatus including an image signal storage section which stores input image signals of a first resolution, a filtering selection section which outputs a filtering selection signal, a control section which calculates an interpolation position for each of a given number of input image signals, a coefficient storage section which stores a plurality of interpolation coefficients classified by the filters, and which outputs the given number of interpolation coefficients corresponding to the filtering selection signal and to the given number of calculated interpolation positions, and an interpolation filter, to which the given number of input image signals and the given number of interpolation coefficients are input from the image signal storage section and the coefficient storage section, respectively, and which executes the selected filtering to output image signals of a second resolution. Different filters are, thus, selectively applied according to frequencies of input images when up-scaling and transforming an image input in a predetermined resolution into another image of a different resolution, whereby degradation of image quality can be avoided.

## Description

The present invention relates to an image interpolation apparatus comprising a digital interpolation filter means.

It is often necessary to change the resolution of an image signal, for instance to match the pixels available in a display device, such as a liquid crystal display panel. When the resolution has to be increased, linear interpolation is used in the vertical and/or the horizontal directions.

US-A-6281873 discloses a method for performing vertical scaling and filtering with the aid of a single processor by using a poly-phase filter.

Hereinbelow, the term, "image interpolation apparatus" means an apparatus for increasing the resolution of an image signal by increasing the number of pixels using an interpolation method. Such image interpolation apparatuses can be found in image display apparatuses. Other names for such apparatuses include scaler, format transform apparatus and image up-scaling apparatus.

Examples of interpolation methods include bi-linear interpolation and cubic convolution interpolation. The bi-linear interpolation and cubic convolution interpolation methods use finite impulse response (FIR) filters.

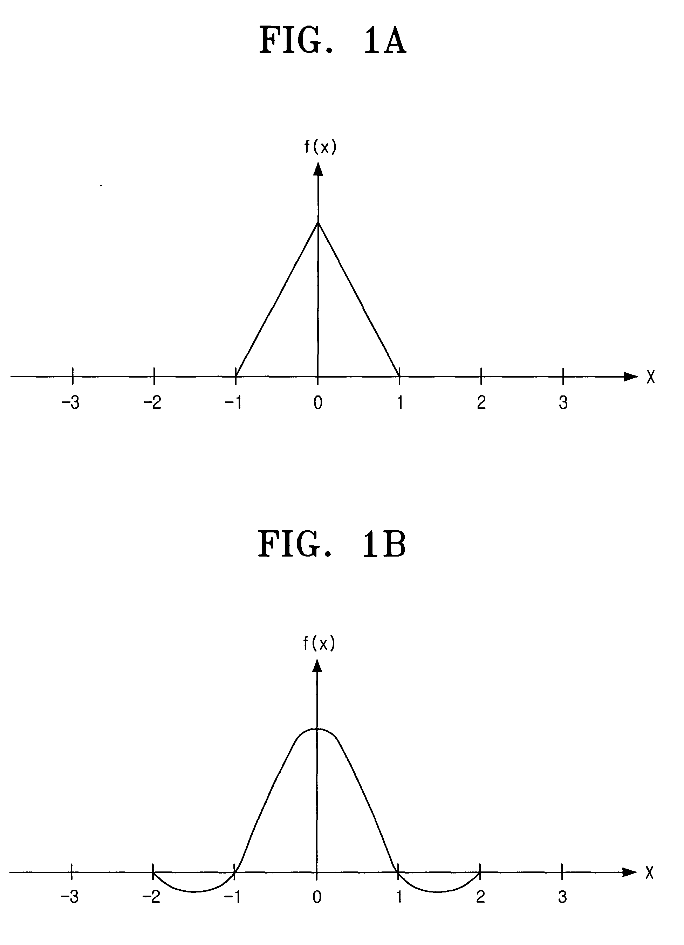

The bi-linear interpolation method interpolates an input signal using a 2-tap filter with the characteristic shown in Figure 1A. In this method only the two immediately on either side of the location of the new pixel are used.

The cubic convolution interpolation interpolates an input signal using a 4-tap filter with the characteristic shown in Figure 1B. In this method two pixels on either side of the location of the new pixel are used.

However, neither of these methods is optimal for all signals. For example, if the cubic convolution interpolation method is used, high frequency regions of the image are degraded.

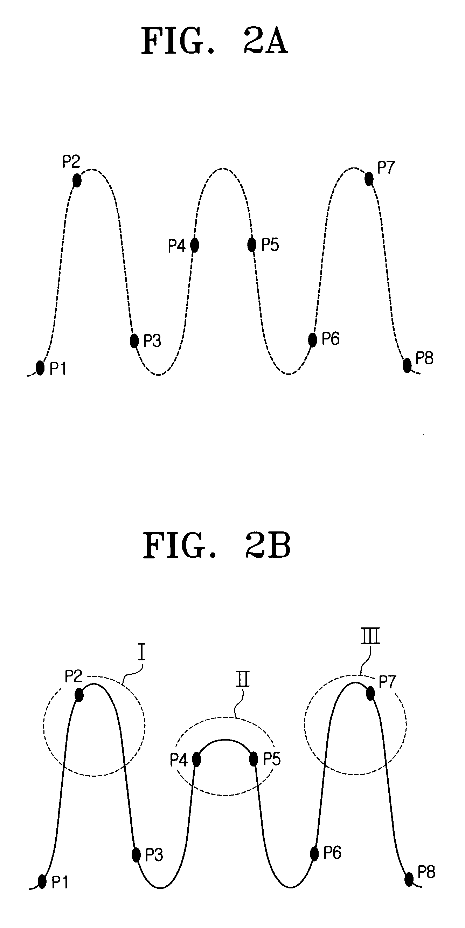

Specifically, when pixels P1 to P8, sampled as shown in Figure 2A, are interpolated using cubic convolution interpolation, it can be seen that pixels interpolated in section II are relatively dim compared to sections I and III as shown in Figure 2B. Accordingly, in this case, it is desirable to use another interpolation in section II, which produces less degradation.

An image interpolation apparatus, according to the present invention, is characterised by control means for changing the transfer function of filter means in dependence on a frequency-related parameter of the image signal being interpolated.

The control means may be configured to determine whether the pattern of brightness of pixels in a moving window meets a predetermined criterion or predetermined criteria and change the transfer function of the filter means (350) in dependence on the result of said determination. The length of the moving window is preferably not shorter than the largest number of taps employed in said filter means. The criterion or criteria may comprise the presense of a run of three inter-pixel periods during which the brightness changes by an amount greater than a predetermined negative number or a run of three inter-pixel periods during which the brightness changes by an amount less than a predetermined positive number. The predetermined negative and positive numbers have magnitudes that are small compared with the maximum magnitude that the image signal pixel brightness may have so as to provide a degree of noise immunity. The criterion or criteria comprise a plurality of instances of no change in brightness over an inter-pixel period.

The filter means may comprises an FIR filter with variable coefficients which can be changed by the control means to change the transfer function of the filter means. Alternatively, separate filters may be used. Preferably, there is a memory for storing a plurality of sets of coefficients, each set corresponding to a different filter tranfer function, e.g. a 4-tap filter transfer function and an 8-tap filter transfer function.

Further preferred and optional features of the present invention are set forth in claims 11 to 25 appended hereto.

An embodiment of the present invention will now be described, by way of example, with reference to Figures 3 to 8 of the accompanying drawings, in which:
Figures 1A and 1B illustrate the characteristics of 2-tap and 4-tap filters used in conventional interpolation methods;
Figures 2A and 2B illustrate a problem that arises in the use of cubic convolution interpolation;
Figure 3 is a block diagram of an image interpolation apparatus according to the present invention;
Figure 4 shows eight sequentially input image signals to illustrate the generation of a filter selection signal;
Figure 5 illustrates the case in which the filtering selection section of the apparatus in Figure 3 determines whether the eight input image signals belong to a graphic region or an edge region;
Figures 6A and 6B illustrate interpolation positions calculated, according to a resolution transformation ratio, in the control section shown in Figure 3;
Figure 7 illustrates a method of producing interpolation coefficients with the aid of given interpolation positions calculated in the control section shown in Figure 3; and
Figure 8 is a flowchart illustrating an image interpolation method performed by the image interpolation apparatus shown in Figure 3.

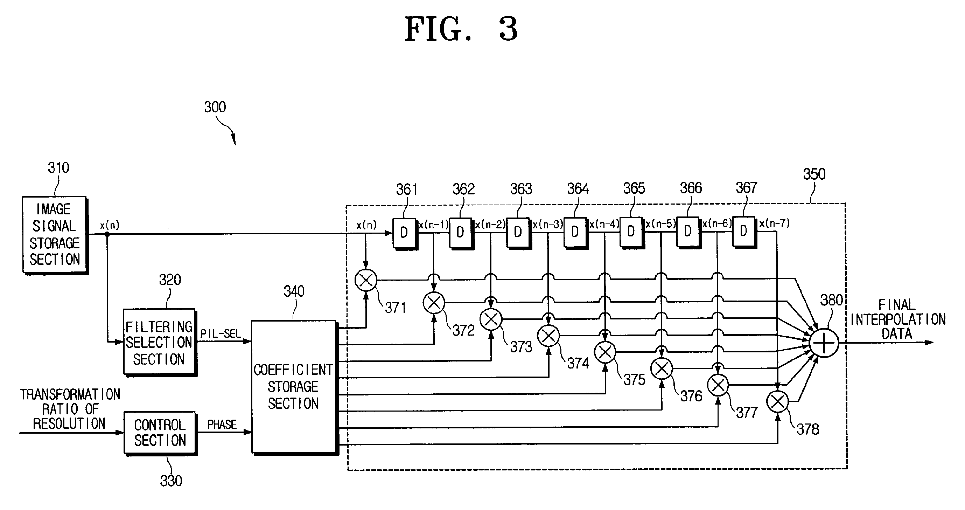

Referring to Figure 3, an image interpolation apparatus 300 according to the present invention comprises an image signal storage section 310, a filtering selection section 320, a control section 330, a coefficient storage section 340 and an interpolation filter 350.

The image interpolation apparatus 300 is an apparatus for up-scaling, i.e. increasing the resolution of, input image signals of a first resolution to output image signals of a second resolution according to a predetermined resolution transformation ratio. The resolution transformation ratio is the ratio of the input and output image signal resolutions.

The image signal storage section 310 stores image signals input from an image signal source. The image signal storage section 310 provides the input image signals for the filtering selection section 320 and the interpolation filter 350 under the control of the control section 320 to be described later.

The filtering selection section 320 analyzes changes in the brightness of the input image signals provided from from the image signal storage section 310. The filtering selection section 320 outputs a filtering selection signal for controlling the selection of one filter from a plurality of different filters on the basis of the analysis of the signal brightness. Specifically, the filtering selection section 320 determines the frequency of the input image signals and outputs an appropriate filtering selection signal.

In the present embodiment, a 4-tap filter using cubic convolution interpolation and an 8-tap filter using poly-phase interpolation used by way of example. The 4-tap filter is used for low frequency image signals, i.e. those having a frequency lower than a reference frequency, and the 8-tap filter is used for image signals having a frequency higher than the reference frequency.

More specifically, the filtering selection section 320 determines whether there exists a pattern in which the brightness of the input image signal continuously increases or decreases over a previously established time for a given number of pixels. If it is determined that such a pattern exists, the filtering selection section 320 determines it to be a low frequency region and outputs a filtering selection signal for selecting the 4-tap filter. Whereas, if it is determined that such a pattern does not exist, the filtering selection section 320 outputs a filtering selection signal for selecting the 8-tap filter.

If the brightness does not change by more than a reference value between two successive input pixels, the filtering selection section 320 determines that the previously determined pattern, (i.e. increasing or decreasing) is continuing. The use of the reference value is to prevent an edge region from being determined to be a high frequency region by recognizing the edge as image signals interleaved with a noise signal.

When the brightness comparison for the given number of input pixels is completed, the oldest pixel is cleared from the given number of pixels and a new pixel input into the filtering selection section 320. Thus, the filtering selection section 320 operates on a pixels in a moving window.

In the present example, the moving window is eight pixels wide and the filtering selection signal is generated by analysing the brightness of eight input pixels and determining whether there exists a pattern where the brightness continuously increases or decreases across four pixels, i.e. three inter-pixel periods.

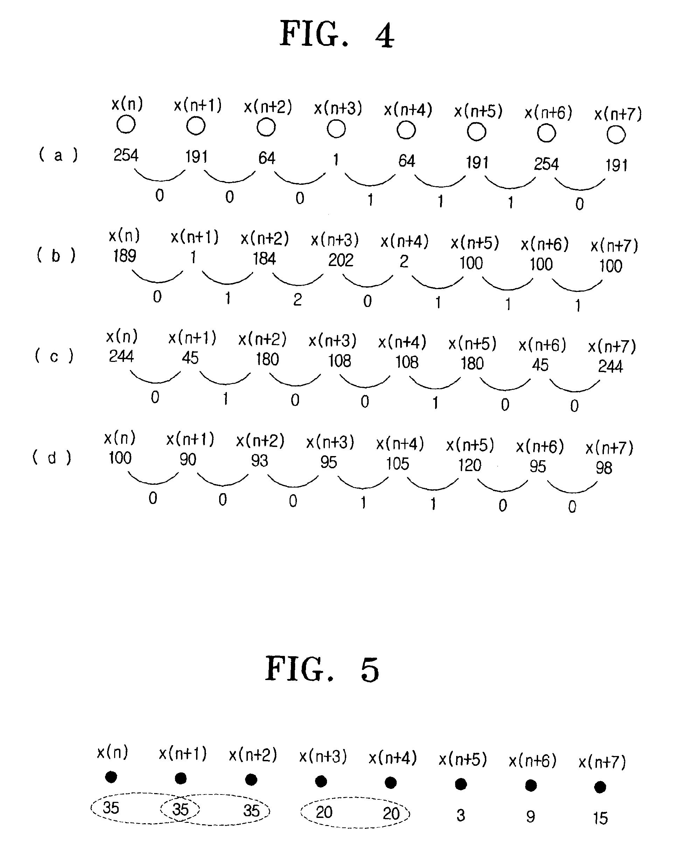

In Figure 4, the first to the eighth input pixels, x(n) to x(n+7) in the moving window, are expressed in terms of brightness. In addition, the numbers below the first to eighth input image signals x(n) to x(n+7) are the corresponding brightness levels.

Referring to Figure 4(a), it can be seen that the brightness decreases over the first three inter-pixel periods, i.e. from the first input pixel x(n) to the fourth input pixel x(n+3), while the brightness increases over the next three inter-pixel periods from the fourth input pixel x(n+3) to the seventh input pixel x(n+6). In this case, the filtering selection section 320 outputs the 4-tap filter selection signal.

The filtering selection section 320 calculates the differences in brightness between pair of successive pixels and if the brightness decreases, a brightness change value is set to '1', while if the brightness levels increase, a brightness change value is set to '0' instead. The filtering selection section 320 determines whether the brightnesses form an increase pattern or a decrease pattern, from the brightness change values. For example, in Figure 4(a), the brightness decreases between the first input image signal x(n) and the second input image signal x(n+1), and the brightness change value is set to '0'. Whereas, the brightness increases between the fourth input image signal x(n+3) and the fifth input image signal x(n+4) and the brightness change value is set to '1'. In this example, there is consequently a run of three "0"s followed by a run of three "1"s. Therefore, the filtering selection section 320 outputs a selection signal for the 4-tap filtering during these runs.

Referring to Figure 4(b), it can be seen that the brightness of the sixth to eighth input pixels is the same. Because the brightness increased between the fifth input pixel x(n+4) and the sixth pixel x(n+5), the filtering selection section 320 treats the sixth to eighth pixels as part of a sequence of increasing brightness. Therefore, the filtering selection section 320 determines that the brightness has an increasing pattern from the fifth to eighth input pixels x(n+4) to x(n+7) over three consecutive inter-pixel periods and, thus, the filtering selection section 320 outputs the 4-tap filtering selection signal.

Referring to Figure 4(c), it can be seen that there is no interval in which the brightness continuously increases or decreases over three consecutive inter-pixel periods between the first and eighth input pixels x(n) to x(n+7). In this case, the filtering selection section 320 outputs the 8-tap filtering selection signal.

Referring to Figure 4(d), the brightness decreases between the first input pixel x(n) and the second input pixel x(n+1), whereas the brightness increases between the second input pixel x(n+1) and the third input pixel x(n+2). However, because the difference between the brightness of the second input pixel x(n) and the second input pixel x(n+1) is lower than a previously established reference level, e.g. 5, the filtering selection section 320 treat the actual increase between the second and third pixels as a continuation of a decreasing pattern. This is identically applied to the brightness levels between the third input image signal x(n+2) and the fourth input image signal x(n+4). In the case shown in Figure 4d, the filtering selection section 320 determines that the brightness levels form a decrease pattern, of which the brightness levels continuously decrease over three consecutive times and thus the filtering selection section 320 outputs the 4-tap filtering selection signal.

In addition, the filtering selection section 320 can detect graphic regions and edge regions. If the pixel brightness does not change over a plurality of pixels a plurality of times, the filtering selection section 320 that the pixels belong to a graphic region or an edge region and outputs the 4-tap filtering selection signal because because a ringing phenomenon occurs if the 8-tap filter is used on graphic or edge regions.

For example, when the brightnesses of the first to eighth input pixels x(n) to x(n+7) are as shown in Figure 5, there exist three sections (indicated by dotted lines), in each of which two consecutive input pixels have equal brightnesses. Therefore, the filtering selection section 320 determines that pixels belong to a graphic region or an edge region and thus the filtering selection section 320 outputs the 4-tap filtering signal. In Figure 5, the numbers below the first to eighth input image signals x(n) to x(n+7) are the brightnesses of the respective pixels.

The control section 330 controls the input rate of the input image pixels from the image signal storage section 310 into the interpolation filter 350 according to the resolution transformation ratio. This is the case in which the present invention relates to image up-scaling, or an increase in resolution. In the case of image down-scaling, or a decrease in resolution, the control section 330 controls the output rate of the output image pixels from the interpolation filter 350. In addition, the control section 330 calculates an interpolation position for each of the given number of input image pixels input into the filtering selection section 320 according to the resolution transformation ratio.

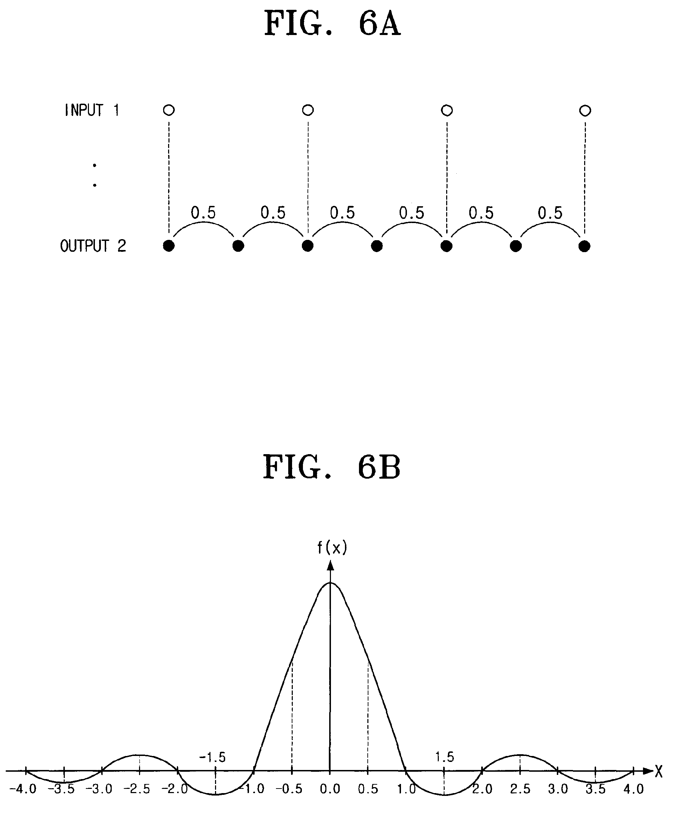

Figures 6A and 6b are drawings for illustrating interpolation positions calculated according to a predetermined resolution transformation ratio in the control section shown in Figure 3.

Referring to Figure 6A, the white circles indicate positions of input image signals and the black circles indicate interpolation positions calculated according to a resolution transformation ratio.

Specifically, if the transformation ratio is 1:2 as shown in Figure 6A, the scale factor in the horizontal direction is 0.5. Therefore, if horizontal interpolation is executed by using 8-tap poly-phase interpolation kernel as shown in Figure 6B, it can be seen that the interpolation positions for the input pixels correspond to -3.5, -2.5, -1.5, - 0.5, +0.5, +2.5 and +3.5, respectively. As another example, if the resolution transformation ratio is 3:5, the scale factor in the horizontal direction is 0.6.

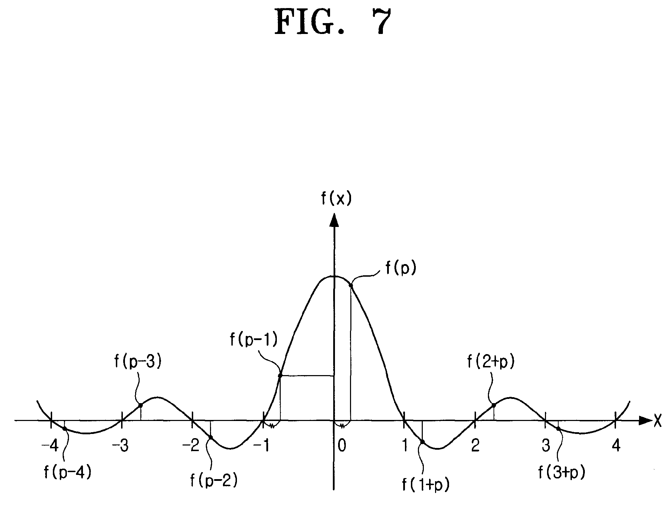

The coefficient storage section 340 stores interpolation coefficients corresponding to a plurality of interpolation positions, that is, tap weight values, in which the interpolation coefficients of tap weight values are classified by the filters. The interpolation coefficients can be calculated by using the 8-tap poly-phase interpolation kernel as shown in Figure 7.

Figure 7 illustrates a method for producing coefficients on the basis of the predetermined interpolation positions calculated in the control section of Figure 3.

Referring to Figure 7, in the 8-tap poly-phase interpolation kernel, eight input pixels participate in interpolation. In addition, when a plurality of interpolation positions are (p-4), (p-3), (p-2), (p-1), (p), (p+1), (p+2) and (p+3), a plurality of interpolation coefficients needed for obtaining final interpolation data are f(p-4), f(p-3), f(p-2), f(p-1), f(p), f(p+1), f(p+2) and f(p+3). Here, p is a relative positional value in each tap interval.

These interpolation coefficients are previously calculated using the 8-tap poly-phase interpolation kernel and stored in the coefficient storage section 340. For example, if each interval between taps is divided into 32 sections, interpolation positions in an interval between taps will have relative positional values such as 0, 1/32, 2/32,3/32, ... , 31/32, 1, respectively, and vertical and horizontal interpolation coefficients corresponding to respective interpolation positions are calculated in advance and stored in the coefficient storage section 340. Meanwhile, each interval between taps is capable of being divided into another number of sections, such as 16 sections, 64 sections, etc.

The coefficient storage section 340 stores horizontal interpolation coefficients for 4-tap filtering and 8-tap filtering. Therefore, the coefficient storage section 340 outputs horizontal interpolation coefficients corresponding to the filtering selection signal output from the filtering selection section 320 and to a given number of interpolation positions calculated from the control section 330.

That is, when the 8-tap filtering is selected by the filtering selection section 320, the coefficient storage section 340 outputs eight interpolation coefficients. Whereas, if the 4-tap filtering is selected by the filtering selection section 320, the coefficient storage section 340 outputs eight interpolation coefficients, in which 2 taps at each end of the 8-taps have an interpolation coefficient of '0'. This is because the interpolation 350 to be described later is provided with eight multipliers 371 to 378, and the 4-tap filtering performs interpolation using four interpolation coefficients.

The calculation of interpolation positions and filtering coefficients corresponding to respective interpolation positions according to a resolution transformation ratio is an already known technology and thus one skilled in the art knows such a technology. Therefore, detailed description thereof is omitted.

The interpolation filter 350 selectively provides a desired one of at least two FIR filters for executing interpolation in the horizontal direction using interpolation coefficients outputted from the coefficient storage section 340. A 4-tap filter and an 8-tap filter may provide the at least two FIR filters. However, it is possible to use not only a 4-tap filter but also a 2-tap filter. In addition, the interpolation filter 350 calculates final interpolation data in the horizontal direction using a given number of input image signals sequentially input from the image signal storage section 310 and a given number of interpolation coefficients output from the coefficient storage section 340.

For this purpose, the interpolation filter 350 includes first to seventh delays 361 to 367, first to eighth multipliers 371 to 378 and an adder 380.

The first to seventh delays 361 to 367 (in the drawing, reference symbol 'D' refers to 'delay') delay the input image signals input from the image signal storage section for a predetermined length of time, and output delayed input image signals to the second to eighth multipliers 372 to 378. Therefore, if the input image signal x(n) is delayed in the first delay 361, the sixth input image signal x(n-6) is delayed in the seventh delay 367 for a predetermined length of time.

More specifically, the first delay 361 receives the input image signal x(n) and outputs the first delayed pixel x(n-1) delayed for a predetermined length of time to the second delay 362 and the second multiplier 372.

The second delay 362 delays the first delay image signal x(x-1) input from the first delay 361 for a predetermined length of time and then outputs the second delay pixel x(n-2) delayed for the predetermined length of time to the third delay 363 and the third multiplier 373.

The third to sixth delayers 363 to 366 receive input image signals and output delay signals after delaying the input image signals for a predetermined length of time, in a same manner as described above. Therefore, detailed description is omitted.

In addition, the seventh delay 367 delays the sixth delayed pixel x(n-6) input from the sixth delay 366 for a predetermined length of time and outputs the seventh delay image signal x(n-7) delayed for the predetermined length of time to the eighth multiplier 378.

The first to eighth multipliers 371 to 378 multiply the brightness levels of input image signals delayed in each of the delayers and the interpolation coefficients outputted from the coefficient storage section 340 and corresponding to the input image signals, respectively.

In more detail, the first multiplier 371 multiplies the input pixel x(n) from the image signal storage section 310 and an interpolation coefficient corresponding to the input pixel x(n), thereby producing a first interpolation data.

In addition, the second multiplier 372 multiplies the first delay pixel x(n-1) from the first delay 361 and an interpolation coefficient corresponding thereto, thereby producing second interpolation data.

Similarly, the third to eighth multipliers 371 to 378 respectively multiply the second to seventh delay pixels x(n-2) to x(n-7) from the second to seventh delays 361 to 367 and interpolation coefficients corresponding thereto, thereby producing third to eighth interpolation data.

In this case, if the 8-tap filter is selected by the filtering selection section 320, the coefficient storage section 340 outputs eight interpolation coefficients corresponding to the multipliers, respectively. Meanwhile, if the 4-tap filter is selected by the filtering selection section 320, the coefficient storage section 340 outputs '0' for interpolation coefficients corresponding to the first, second, seventh and eighth multipliers 371, 372, 377 and 378, respectively, and outputs another four interpolation coefficients corresponding to the multipliers 371 to 378, respectively. As a result, the interpolation filter 350 will adaptively apply any one of the 4-tap filter and the 8-tap filter according to the brightness pattern of the input image signals, thereby producing final interpolation data.

The adder 380 adds all the first to eighth interpolation data output from the first to eighth multipliers 371 to 378, thereby outputting final interpolation data. As a result, the interpolation filter 350 will execute horizontal up-scaling of input image signals through horizontal interpolation.

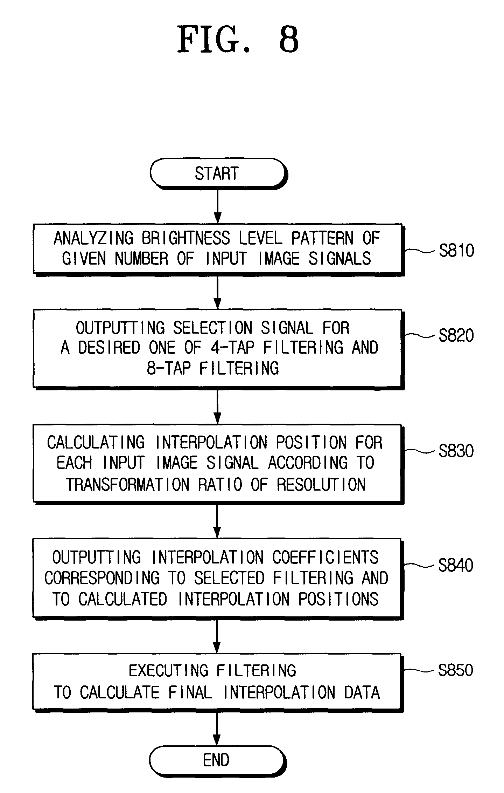

Referring to Figures 3 to 8, at first, the filtering selection section 320 analyzes a brightness level pattern for a given number of input image signals sequentially input from the image signal storage section (step 810). If step 810 is executed, the filtering selection section 320 outputs a selection signal for a desired one of the 4-tap filter and 8-tap filter to the coefficient storage section according to the analyzed brightness level pattern (step 820). Here, the brightness level pattern means a run of increasing or decreasing brightness..

The control section 330 calculates interpolation positions relative to the input pixels in accordance with the resolution transformation ratio, and then outputs the calculated interpolation positions to the coefficient storage section 340 (step 830). When step 830 is executed, the coefficient storage section 340 outputs the given number of the coefficients corresponding to the filtering selection signal and to the calculated interpolation positions output from step 820 and step 830, respectively (step 840).

After step 840, the interpolation filter 350 multiplies the input pixel x(n) and the first to seventh delayed pixels x(n-1) to x(n-7) from the image signal storage section 310 by respective coefficients and produces first to eighth interpolation data. The interpolation filter 350 adds the first to eighth interpolation signals together and outputs the final interpolation data (step 850). As a result, the interpolation of input image signals are executed by using a desired filter selected by the filtering selection section 320.

The image interpolation apparatus and method are described above in connection with the cases in which any one of a 4-tap filter which is a cubic convolution interpolation filter and an 8-tap filter which is a poly-phase interpolation filter is adaptively selected to interpolate an image. However, it is also possible to apply a 2-tap filter instead of the 4-tap filter.

In addition, although the image interpolation apparatus and method are described only in connection with the horizontal interpolation, it is of course possible to apply the present invention to vertical interpolation.

Furthermore, the image interpolation apparatus and method can execute more clear interpolation by determining whether input image signals belong to a graphic region or an edge region by determining frequencies according to brightness levels of input image signals.

As described above, according to the image interpolation apparatus and method, it is possible to interpolate an image by selectively applying filters different from each other according to frequencies of input images when up-scaling and transforming an image input with a predetermined resolution into another image of a different resolution. Therefore, in image interpolation, high frequency image signals are interpolated by using an 8-tap filter, whereby it is possible to avoid degradation of image quality caused, for example, by aliasing, while low frequency image signals are interpolated by using a 4-tap filter, whereby it is possible to avoid degradation of image quality caused, for example, by ringing.

## Claims

**1.** An image interpolation apparatus comprising a digital interpolation filter means (350), **characterised by** control means (320, 330, 340) for changing the transfer function of filter means (350) in dependence on a frequency-related parameter of the image signal being interpolated.

**2.** An apparatus according to claim 1, wherein the control means (320, 330, 340) is configured to determine whether the pattern of brightness of pixels in a moving window meets a predetermined criterion or predetermined criteria and change the transfer function of the filter means (350) in dependence on the result of said determination.

**3.** An apparatus according to claim 2, wherein the length of the moving window is not shorter than the largest number of taps employed in said filter means (350).

**4.** An apparatus according to claim 2 or 3, wherein said criterion or criteria comprise the presense of a run of three inter-pixel periods during which the brightness changes by an amount greater than a predetermined negative number or a run of three inter-pixel periods during which the brightness changes by an amount less than a predetermined positive number.

**5.** An apparatus according to claim 4, wherein the predetermined negative and positive numbers have magnitudes that are small compared with the maximum magnitude that the image signal pixel brightness may have so as to provide a degree of noise immunity.

**6.** An apparatus according to claim 4 or 5, wherein said criterion or criteria comprise a plurality of instances of no change in brightness over an inter-pixel period.

**7.** An apparatus according to any preceding claim, wherein the filter means comprises an FIR filter (350) with variable coefficients which can be changed by the control means (320, 330, 340) to change the transfer function of the filter means (350).

**8.** An apparatus according to claim 7, including a memory (340) storing a plurality of sets of coefficients, each set corresponding to a different filter tranfer function.

**9.** An apparatus according to claim 7 or 8, wherein a tranfer function of the filter means (350) is a 4-tap filter transfer function.

**10.** An apparatus according to claim 7, 8 or 9, wherein a tranfer function of the filter means (350) is an 8-tap filter transfer function.

**11.** An image interpolation apparatus, which interpolates input image signals of a first resolution to output image signals of a second resolution according to a transformation ratio of resolution, wherein the image interpolation apparatus comprises:
an image signal storage section operable to store the input image signals;
a filtering selection section operable to output a filtering selection signal for a desired one of at least two different interpolation filters according to a brightness level pattern of a given number of the input image signals sequentially input from the signal storage section;
a control section operable to calculate an interpolation position for each of the given number of input image signals according to the transformation ratio of resolution;
a coefficient storage section operable to store a plurality of interpolation coefficients classified by the filters, and further operable to output the given number of interpolation coefficients corresponding to the filtering selection signal and to the given number of calculated interpolation positions; and
an interpolation filter, to which the given number of input image signals and the given number of interpolation coefficients corresponding to the filtering selection signal are input from the image signal storage section and the coefficient storage section, respectively, and which is operable to execute the selected filter to output the output image signals.

**12.** The apparatus according to claim 11, wherein the at least two filters are a 4-tap filter and an 8-tap filter.

**13.** The apparatus according to claim 12, wherein the filtering selection section is operable to output a filtering selection signal for the 4-tap filter if it is determined that the brightness level pattern is either a pattern in which the brightness levels of the given number of input image signals continuously increase over a previously established number of times and a pattern in which the brightness levels of the given number of input image signals continuously decrease over a previously established number of times.

**14.** The apparatus according to claim 13, wherein if the brightness levels of two input image signals continuously input among the given number of input image signals are the same, the filtering selection section applies a prior brightness level pattern determined prior to determining the brightness level pattern between the two input image signals as the brightness level pattern of the two input image signals.

**15.** The apparatus according to claim 13, wherein if the difference between the brightness levels of the two input image signals is lower than a previously established reference level, the filtering selection section applies a prior brightness level pattern determined prior to determining the brightness level pattern between the two input image signals as the brightness level pattern of the two input image signals.

**16.** The apparatus according to claim 13, wherein the previously established number of times is at least two.

**17.** The apparatus according to claim 11, wherein the at least two filters is a plurality of finite impulse response filters including an 8-tap filter.

**18.** The apparatus according to claim 11, wherein the interpolation filter comprises:
a plurality of delayers operable to output the given number of input image signals sequentially input from the image signal storage section after delaying the input image signals for a predetermined length of time;
a plurality of multipliers operable to respectively multiply the given number of input image signals output from the plurality of delayers and the given number of coefficients output from the coefficient storage section to output the given number of interpolation data; and
an adder operable to add the given number of interpolation data output from the plurality of multipliers to output the output image signals.

**19.** The apparatus according to claim 11, wherein the control section is operable to control the velocities of the input image signals input into the interpolation filter from the image signal storage section according to the transformation ratio of resolution.

**10.** An image interpolation method for interpolating input image signals of a first resolution to output image signals of a second resolution according to a transformation ratio of resolution, wherein the method comprises:
outputting a filtering selection signal for a desired one of at least two different interpolation filters according to a brightness level pattern of a given number of input image signals which are sequentially input;
calculating an interpolation position for each of the given number of input image signals according to the transformation ratio of resolution;
outputting the given number of interpolation coefficients corresponding to the filtering selection signal and to the given number of calculated interpolation positions among a plurality of stored interpolation coefficients; and receiving the given number of input image signals and the given number of interpolation coefficients corresponding to the filtering selection signal and performing the selected filtering to output the output image signals.

**21.** The method according to claim 20, wherein the at least two filters are a 4-tap filter and an 8-tap filter.

**22.** The method according to claim 21, wherein the filtering selection step outputs a filtering selection signal for the 4-tap filter if it is determined that the brightness level pattern is any of a pattern in which the brightness levels of the given number of input image signals continuously increase over a previously established time, and a pattern in which the brightness levels of the given number of input image signals continuously decrease over a previously established time.

**23.** The method according to claim 22, wherein if the brightness levels of two input image signals continuously input among the given number of input image signals are the same, the filtering selection section applies a prior brightness level pattern determined prior to determining the brightness level pattern between the two input image signals as the brightness level pattern of the two input image signals.

**24.** The method according to claim 22, wherein if a difference between the brightness levels of the two input image signals is lower than a previously established reference level, the filtering selection section applies a prior brightness level pattern determined prior to determining the brightness level pattern between the two input image signals as the brightness level pattern of the two input image signals.

**25.** The method according to claim 20, wherein the step of performing the selected filtering comprises:
outputting the given number of input image signals, which are sequentially input, after delaying the input image signals for a predetermined length of time; respectively multiplying the given number of input image signals output in the delaying step and the given number of coefficients output from the interpolation coefficient outputting step to output a given number of interpolation data; and adding the given number of the interpolation data output from the multiplying step to output the output image signals.
